# EUROPEAN PATENT APPLICATION

(11) **EP 2 911 116 A1**
(43) Date of publication of application: **26.08.2015**
(21) Application number: 13846554.7
(22) Date of filing: 10.09.2013
(51) Int. Cl.: G06T 7/60, B25J 19/04, G01B 11/00, G06T 1/00, G06T 7/00

(54) **IMAGE-PROCESSING DEVICE, IMAGE-PROCESSING METHOD, AND IMAGE-PROCESSING PROGRAM**

(30) Priority: 18.10.2012 JP 2012230872
(71) Applicant: Konica Minolta, Inc., Tokyo 100-7015 (JP)
(72) Inventor: HORITA, Shinichi, Tokyo 100-7015 (JP)
(74) Representative: Hoffmann Eitle
(86) International application number: PCT/JP2013/074316
(87) International publication number: WO 2014/061372

(57) **Abstract**

An image processing system includes an imaging device that captures an image of a measurement object to obtain a captured image, an arrangement detection unit that detects an arrangement state of the measurement object and determines a tilt angle of the measurement object relative to the imaging device, a storage unit that stores a template image, a skew correction unit that corrects the captured image based on the tilt angle determined by the arrangement detection unit to generate a skew-corrected image, a scale correction unit that calculates an amount of scale deviation between the skew-corrected image and the template image and corrects the skew-corrected image based on the calculated amount of scale deviation to generate a scale-corrected image, and a position search unit that performs template matching using the template image on the scale-corrected image to determine a position corresponding to the template image in the captured image.

## Description

### TECHNICAL FIELD

The present invention relates to an image processing apparatus that detects a position using template matching using a template image, an image processing method, and an image processing program.

### BACKGROUND ART

Template matching is used in a variety of fields for searching a captured image for the position corresponding to a template image registered in advance. In such template matching, if the precision of arrangement of an object to be measured (work) relative to an imaging device (camera) is not so high, the relative positional relation between the camera and the work is not constant, which may lead to failure of template matching. The related arts below are known in connection with such a problem.

Japanese Laid-Open Patent Publication No. 2009-128261 (PTD 1) discloses a visual inspection method for an object. More specifically, this method includes the steps of inputting the relative position between three-dimensional shape data of the inspected surface of an object and a CCD camera, acquiring a plurality of images at least partially overlapped by imaging the entire inspected surface with a plurality of CCD cameras, correcting distortion of each image based on the three-dimensional shape data and developing the corrected image into a plane to produce a plurality of planar images at least partially overlapped.

Japanese Laid-Open Patent Publication No. 2007-309808 (PTD 2) discloses an object position detection method for detecting the position of an object by pattern matching. More specifically, in this method, a substrate is imaged by a substrate recognition camera, and part of the image is registered as a template image. When there is a difference between the attachment angle of the camera when the template image is acquired and the attachment angle of the camera when a substrate is imaged for pattern matching, the registered template image is corrected in accordance with the difference in attachment angle, so that position detection for a substrate is performed by pattern matching with the corrected template image.

Japanese Laid-Open Patent Publication No. 2004-295223 (PTD 3) discloses an image processing apparatus that processes an image obtained with a vision sensor to acquire information about the position and/or posture of an object. More specifically, this apparatus includes means for performing two-dimensional geometric transformation on a model pattern to create a transformed model pattern representing a view of an object having a relative posture three-dimensionally different from a reference relative posture, means for performing pattern matching using the transformed model pattern on image data, means for repeating creation of a transformed model pattern and pattern matching for a plurality of three-dimensional relative postures to select a matching transformed model pattern and obtain positional information of the object in the image data, and means for recognizing the three-dimensional position and/or three-dimensional posture of the object based on the positional information of the object in the image data and the relative posture information corresponding to the selected transformed model pattern.

Q.Chen et al. "Symmetric Phase-Only Matched Filtering of Fourier-Mellin Transforms for Image Registration and Recognition" (NPD 1) discloses a template matching method adapted for scale/roll variations using Fourier-Mellin invariant.

### CITATION LIST

### PATENT DOCUMENT

PTD 1: Japanese Laid-Open Patent Publication No. 2009-128261
PTD 2: Japanese Laid-Open Patent Publication No. 2007-309808
PTD 3: Japanese Laid-Open Patent Publication No. 2004-295223

### NON PATENT DOCUMENT

NPD 1: Q.Chen, M.Defrise, and F. Deconinck, "Symmetric Phase-Only Matched Filtering of Fourier-Mellin Transforms for Image Registration and Recognition", IEEE TRANSACTIONS ON PATTERN ANALYSIS AND MACHINE INTELLIGENCE, VOL. 16, NO. 12, DECEMBER 1994

### SUMMARY OF INVENTION

### TECHNICAL PROBLEM

When a work is roughly arranged relative to the camera, the surface of the work may be skewed relative to the camera. The skew of the surface of the work causes deformation in the captured image, which may lead to failure of template matching. When the distance to the surface of the work to the camera varies, scale deviation occurs between the captured image and the template image, which may lead to failure of template matching.

The related arts above, however, fail to solve such problems. Specifically, the visual inspection method for an object described in PTD 1 cannot be applied successfully when a work is arranged roughly relative to the camera because the method is premised on that the position between the CCD camera and the inspected object is strictly determined. The position detection method described in PTD 2 fails to cope with deviation in the arrangement state of a work because the template image is corrected merely considering the attachment angle of the camera. The image processing apparatus described in PTD 3 is unsuitable in practice because template matching has to be performed for many templates and the computation cost is large. NPD 1 is the approach that is simply designed for XY equal-scaling variations and is not designed for trapezoidal distortion caused by skew of the surface of a work.

An object of the present invention is to provide an image processing apparatus, an image processing method, and an image processing program that can determine the position corresponding to a template image with higher precision even when the arrangement state of a measurement object relative to an imaging device varies.

### SOLUTION TO PROBLEM

According to an aspect of the present invention, an image processing system includes an imaging device that captures an image of a measurement object to obtain a captured image, an arrangement detection unit that detects an arrangement state of the measurement object and determines a tilt angle of the measurement object relative to the imaging device, a storage unit that stores a template image, a skew correction unit that corrects the captured image based on the tilt angle determined by the arrangement detection unit to generate a skew-corrected image, a scale correction unit that calculates an amount of scale deviation between the skew-corrected image and the template image and corrects the skew-corrected image based on the calculated amount of scale deviation to generate a scale-corrected image, and a position search unit that performs template matching using the template image on the scale-corrected image to determine a position corresponding to the template image in the captured image.

According to another aspect of the present invention, an image processing apparatus is provided for use in an image processing system including an imaging device that captures an image of a measurement object to obtain a captured image and an arrangement detection unit that detects an arrangement state of the measurement object and determines a tilt angle of the measurement object relative to the imaging device. The image processing apparatus includes a storage unit that stores a template image, a skew correction unit that corrects the captured image based on the tilt angle determined by the arrangement detection unit to generate a skew-corrected image, a scale correction unit that calculates an amount of scale deviation between the skew-corrected image and the template image and corrects the skew-corrected image based on the calculated amount of scale deviation to generate a scale-corrected image, and a position search unit that performs template matching using the template image on the scale-corrected image to determine a position corresponding to the template image in the captured image.

According to yet another aspect of the present invention, an image processing method is provided for performing template matching using a template image registered in advance. The image processing method includes the steps of: obtaining a captured image of a measurement object captured by an imaging device; detecting an arrangement state of the measurement object and determining a tilt angle of the measurement object relative to the imaging device; correcting the captured image based on the tilt angle to generate a skew-corrected image; calculating an amount of scale deviation between the skew-corrected image and the template image and correcting the skew-corrected image based on the calculated amount of scale deviation to generate a scale-corrected image; and performing template matching using the template image on the scale-corrected image to determine a position corresponding to the template image in the captured image.

According to yet another aspect of the present invention, an image processing program is provided for performing template matching using a template image registered in advance. The image processing program causes a computer to execute the steps of: obtaining a captured image of a measurement object captured by an imaging device; obtaining a tilt angle of the measurement object relative to the imaging device that is determined by an arrangement detection unit; correcting the captured image based on the tilt angle to generate a skew-corrected image; calculating an amount of scale deviation between the skew-corrected image and the template image and correcting the skew-corrected image based on the calculated amount of scale deviation to generate a scale-corrected image; and performing template matching using the template image on the scale-corrected image to determine a position corresponding to the template image in the captured image.

### ADVANTAGEOUS EFFECTS OF INVENTION

According to the present invention, the position corresponding to a template image can be determined with higher precision even when the arrangement state of a measurement object relative to an imaging device varies.

### BRIEF DESCRIPTION OF DRAWINGS

Fig. 1 is a schematic diagram showing an image processing system including an image processing apparatus according to an embodiment of the present invention.
Fig. 2 is a block diagram showing a configuration in which the image processing apparatus according to the embodiment of the present invention is implemented by a personal computer.
Fig. 3 is a schematic diagram showing an example of the functional configuration of the image processing apparatus according to the embodiment of the present invention.
Fig. 4 is a schematic diagram showing the arrangement state of a measurement object detected by an arrangement detection unit in the image processing apparatus according to the embodiment of the present invention.
Fig. 5 is a schematic diagram showing an example of the arrangement state of a measurement object.
Fig. 6 is a schematic diagram showing another example of the arrangement state of a measurement object.
Fig. 7 is a schematic diagram showing an example of data extraction processing by the arrangement detection unit according to the embodiment of the present invention.
Fig. 8 is a schematic diagram showing a configuration example including a laser distance measurement device as the arrangement detection unit.
Fig. 9 is a diagram illustrating the processing in a skew correction unit in the image processing apparatus according to the embodiment of the present invention.
Fig. 10 is a schematic diagram illustrating skew correction processing in the image processing apparatus according to the embodiment of the present invention.
Fig. 11 is a diagram showing examples of the processing result corresponding to the processing in Fig. 10.
Fig. 12 is a schematic diagram illustrating three-dimensional position calculation processing in the image processing apparatus according to the embodiment of the present invention.
Fig. 13 is a schematic diagram showing a first modification of the functional configuration of the image processing apparatus according to the embodiment of the present invention.
Fig. 14 is a schematic diagram showing a second modification of the functional configuration of the image processing apparatus according to the embodiment of the present invention.
Fig. 15 a schematic diagram showing a third modification of the functional configuration of the image processing apparatus according to the embodiment of the present invention.

### DESCRIPTION OF EMBODIMENTS

Embodiments of the present invention will be described in details with reference to the drawings. It is noted that in the figures the same or corresponding parts are denoted with the same reference signs and a description thereof is not repeated.

### [A. Overview]

The present embodiment achieves stable template matching by measuring the posture of the surface of a work using a stereo camera, an optical distance measurement device, or other devices to specify a skew between an imaging device (camera) and the surface of the work, and correcting distortion of the captured image caused by the skew. Here, the template matching is stabilized more by additionally correcting scale (magnitude) variations resulting from the skew correction.

### [B. System Configuration]

First, an image processing apparatus 100 according to an embodiment of the present invention will be described.

### <<b1: Application Example>>

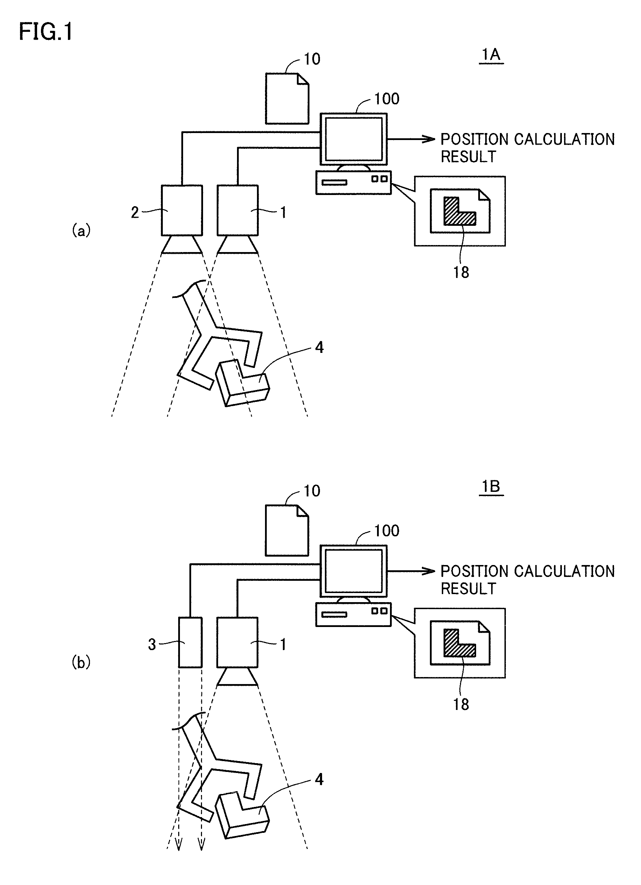

Fig. 1 is a schematic diagram showing an image processing system including an image processing apparatus according to an embodiment of the present invention. As shown in, for example, Fig. 1(a) and Fig. 1(b), the image processing apparatus according to the present embodiment performs template matching using a template image 18 registered in advance for an image (hereinafter referred to as "captured image 10") obtained by capturing an image of a measurement object (hereinafter referred to as "work 4") arranged as appropriate, for example, by a robot arm 8. With this template matching, image processing apparatus 100 determines the position corresponding to the template image in captured image 10.

Image processing systems 1A, 1B each include image processing apparatus 100, an imaging device (camera 1) for capturing an image of a measurement object (work 4) to obtain captured image 10, and an arrangement detection unit for detecting the arrangement state of the measurement object. The arrangement detection unit has a function of measuring distances at a plurality of points and estimates the measurement surface from the distance measurement results for the plurality of points to detect the tilt angle of the surface of work 4 (measurement object surface) relative to the camera. As implementation examples of the arrangement detection unit, a stereo camera including a pair of cameras 1 and 2 is employed in image processing system 1 A shown in Fig. 1(a), and a distance measurement device 3 such as a laser distance measurement device is employed in image processing system 1B shown in Fig. 1(b). In the present embodiment, captured image 10 is generated by camera 1. In the configuration shown in Fig. 1(a), one of the cameras that constitute the stereo camera also functions as an imaging device.

### «b2. Implementation Example with Personal Computer»

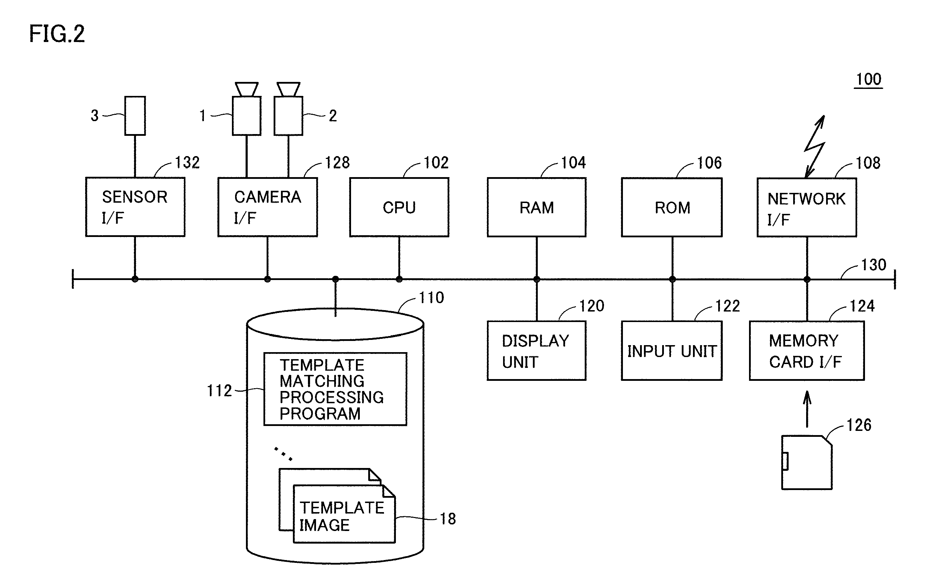

Fig. 2 is a block diagram showing a configuration in which image processing apparatus 100 according to the embodiment of the present invention is implemented by a personal computer.

Referring to Fig. 2, image processing apparatus 100 implemented by a personal computer is mainly implemented on a computer having a general architecture. Referring to Fig. 2, image processing apparatus 100 includes, as main components, a CPU (Central Processing Unit) 102, a RAM (Random Access Memory) 104, a ROM (Read Only Memory) 106, a network interface (I/F) 108, an auxiliary storage device 110, a display unit 120, an input unit 122, a memory card interface (I/F) 124, a camera interface (I/F) 128, and a sensor interface (I/F) 132. The components are connected through a bus 130 so as to communicate with each other.

CPU 102 executes a variety of programs such as an operating system (OS) and a template matching processing program 112 stored in ROM 106, auxiliary storage device 110, or others. RAM 104 functions as a working memory for executing a program on CPU 102 and temporarily stores a variety of data necessary for execution of the program. ROM 106 stores, for example, an initial program (boot program) executed during startup in image processing apparatus 100.

Network interface 108 exchanges data with another device (such as a server device) through a variety of communication media. More specifically, network interface 108 performs data communication through a wired network such as Ethernet (registered trademark) (for example, a LAN (Local Area Network) and a WAN (Wide Area Network)) and/or a wireless network such as a wireless LAN.

Auxiliary storage device 110 typically includes a mass-storage magnetic recording medium such as a hard disk and stores an image processing program (for example, template matching processing program 112), template image 18, and the like for implementing a variety of processing according to the present embodiment. Auxiliary storage device 110 may further store a program such as an operating system.

Display unit 120 displays a GUI (Graphical User Interface) screen provided by the operating system and, in addition, an image generated through execution of template matching processing program 112.

Input unit 122 typically includes a keyboard, a mouse, and a touch panel and outputs the content of an instruction accepted from a user to, for example, CPU 102.

Memory card interface 124 reads and writes data from/into a variety of memory cards (nonvolatile recording medium) 126 such as an SD (Secure Digital) card and a CF (Compact Flash (registered trademark)) card.

Camera interface 128 takes in a captured image obtained by capturing an image of a measurement object such as work 4, from camera 1. Camera 1 functions as an imaging device for capturing an image of a measurement object to obtain the captured image. It is noted that image processing apparatus 100 may not be connected directly to camera 1. Specifically, the captured image obtained by capturing an image of a measurement object with a camera may be taken in through memory card 126. That is, in this case, memory card 126 is attached to memory card interface 124, and the captured image is read out from memory card 126 and stored (copied) into, for example, auxiliary storage device 110.

Sensor interface 132 takes in, for example, the result of distance measurement by distance measurement device 3. Fig. 2 shows a configuration example that can be adapted for either a stereo camera (camera 1 and camera 2) or distance measurement device 3 to be used as the arrangement detection unit for detecting the arrangement state of a measurement object. When a stereo camera alone is used, sensor interface 132 may not be provided. When distance measurement device 3 alone is used, camera interface 128 may be connected to camera 1 alone.

Template matching processing program 112 stored in auxiliary storage device 110 is stored and distributed on a recording medium such as a CD-ROM (Compact Disk-Read Only Memory) or distributed from a server device through a network. Template matching processing program 112 may be configured to perform processing by invoking necessary modules, among program modules provided as part of the operating system running on image processing apparatus 100 (personal computer), in predetermined timing and order. In this case, template matching processing program 112 does not include modules provided by the operating system per se but cooperates with the operating system to perform image processing. Template matching processing program 112 may not be an independent program but may be incorporated in part of some program. Also in this case, the program does not include modules shared by another program per se but cooperates with another program to perform image processing. Such a manner that does not include part of modules does not depart from the scope of image processing apparatus 100 according to the present embodiment.

Part or the whole of the functions provided by template matching processing program 112 may be implemented by dedicated hardware.

### «b3: Implementation Example with Other Configurations»

In addition to the example of implementation with a personal computer as described above, such an embodiment as cloud service may be employed, in which at least one server device implements the processing according to the present embodiment. In this case, a client device may transmit a captured image to be processed and necessary information to the server (the cloud side), and the server device side may execute necessary processing on the transmitted captured image. The server device side may not necessarily perform all of the necessary functions (processing) but the client device and the server device may cooperate to perform necessary processing.

### [C. Functional Configuration]

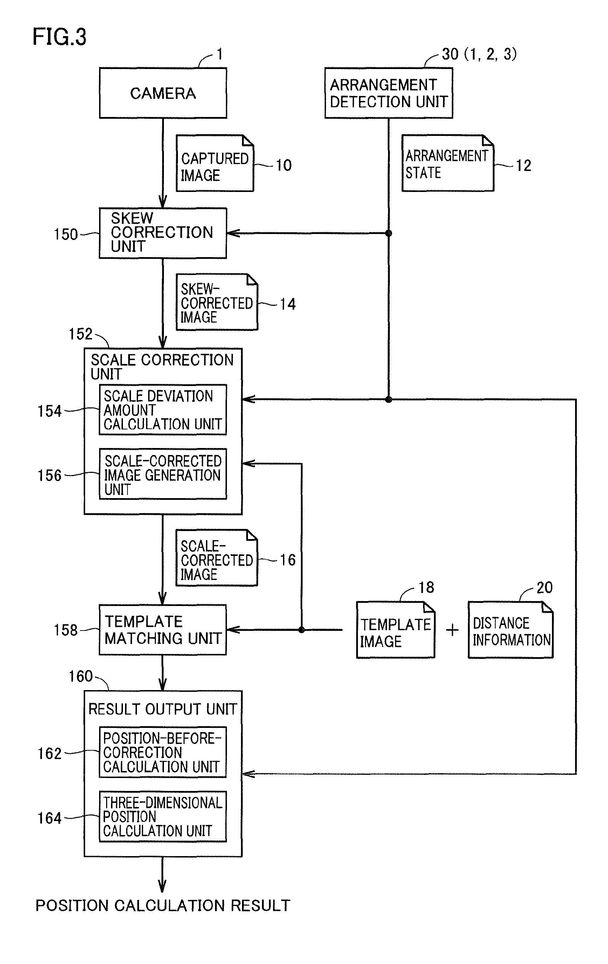

An example of the functional configuration of image processing apparatus 100 according to the embodiment of the present invention will now be described. Fig. 3 is a schematic diagram showing an example of the functional configuration of image processing apparatus 100 according to the embodiment of the present invention. Referring to Fig. 3, image processing apparatus 100 according to the present embodiment includes, as its functional configuration, an arrangement detection unit 30, a skew correction unit 150, a scale correction unit 152, a template matching unit 158, and a result output unit 160. This functional configuration is typically implemented in image processing apparatus 100 shown in Fig. 2 by CPU 102 executing template matching processing program 112. Although arrangement detection unit 30 includes a stereo camera (camera 1 and camera 2) or distance measurement device 3 as described above, its functions are partially implemented by CPU 102, and therefore, in the description here, arrangement detection unit 30 is included in the functional configuration of image processing apparatus 100. Each function of the configuration will be described below.

Arrangement detection unit 30 includes a stereo camera (camera 1 and camera 2) or distance measurement device 3 and detects the posture and distance of a measurement object (work 4) relative to camera 1 based on the output therefrom to output the detected posture and distance as an arrangement state 12. The information of arrangement state 12 includes the tilt angle of the measurement object (work 4) relative to camera 1.

Skew correction unit 150 receives captured image 10 generated by camera 1 and receives the information of arrangement state 12 of work 4 detected by arrangement detection unit 30. Skew correction unit 150 generates a skew-corrected image 14 of the measurement object with the corrected tilt angle, using the information of the tilt angle relative to camera 1 of the measurement object detected by arrangement detection unit 30. That is, skew correction unit 150 generates skew-corrected image 14 by performing the processing of correcting the tilt angle of the surface of work 4 (measurement object surface) relative to camera 1 that is obtained by arrangement detection unit 30, for captured image 10 of work 4 captured by camera 1.

Template image 18 is generated by extracting a partial image including a region of interest for position detection, from an image captured in such a manner that the surface of the work (measurement object surface) serving as a reference faces camera 1 straight. In addition to template image 18, distance information 20 is retained, which includes the output result (the information of arrangement state 12) from arrangement detection unit 30 at the time of capturing template image 18.

That is, image processing apparatus 100 has a template generation unit that generates template image 18 from captured image 10. The template generation unit stores the arrangement state corresponding to the generated template image 18 at the time when captured image 10 is captured, in relation with the generated template image 18. In other words, template image 18 is set using captured image 10 captured by camera 1. Here, arrangement state 12 at the time of capturing template image 18 (captured image 10) that is output from arrangement detection unit 30 is stored together. Since template image 18 is retained together with the information of arrangement state 12 of work 4 at the time of template image capturing, template image 18 can be corrected even when template image 18 (captured image 10) is captured in a state in which the measurement object surface is inclined relative to camera 1. Template matching thus can be executed more stably.

Scale correction unit 152 calculates the amount of scale deviation between skew-corrected image 14 and template image 18 and corrects skew-corrected image 14 based on the calculated amount of scale deviation to generate a scale-corrected image 16. Scale correction unit 152 receives skew-corrected image 14 generated by skew correction unit 150 and receives template image 18. Scale correction unit 152 includes a scale deviation amount calculation unit 154 and a scale-corrected image generation unit 156. Scale deviation amount calculation unit 154 calculates the amount of scale deviation between skew-corrected image 14 and template image 18 for skew-corrected image 14, based on the distance information from camera 1 to the surface of work 4 (measurement object surface) that is obtained by arrangement detection unit 30 and distance information 20 at the time of capturing template image 18. Scale-corrected image generation unit 156 then performs scale correction on skew-corrected image 14 based on the information of the amount of scale deviation calculated by scale deviation amount calculation unit 154 and generates scale-corrected image 16.

Template matching unit 158 performs template matching using template image 18 on scale-corrected image 16. That is, template matching unit 158 performs template matching processing between scale-corrected image 16 and template image 18 and obtains the positon detection result corresponding to template image 18 in scale-corrected image 16.

Result output unit 160 determines the position corresponding to template image 18 in captured image 10. That is, based on the position detection result corresponding to template image 18 in scale-corrected image 16, result output unit 160 calculates the position corresponding to that position in captured image 10. Result output unit 160 calculates the three-dimensional position of work 4, based on the calculation result for the position in captured image 10 and arrangement state 12 detected by arrangement detection unit 30.

More specifically, result output unit 160 includes a position-before-correction calculation unit 162 and a three-dimensional position calculation unit 164. Position-before-correction calculation unit 162 converts the position detection result by template matching unit 158 into a position in captured image 10. Three-dimensional position calculation unit 164 calculates the three-dimensional position of work 4 as viewed from camera 1 that corresponds to the template position, based on the template position in captured image 10 and the information of arrangement state 12 by arrangement detection unit 30, and outputs the calculated position as a position calculation result.

As described above, image processing apparatus 100 shown in Fig. 1 corrects distortion caused by the skew of the surface of work 4 (measurement object surface) relative to camera 1. An image close to template image 18 thus can be obtained, thereby stabilizing template matching.

The details of the functional configuration will be described below.

### [D. Arrangement Detection Unit]

A stereo camera (camera 1 and camera 2) or distance measurement device 3 may typically be used as arrangement detection unit 30.

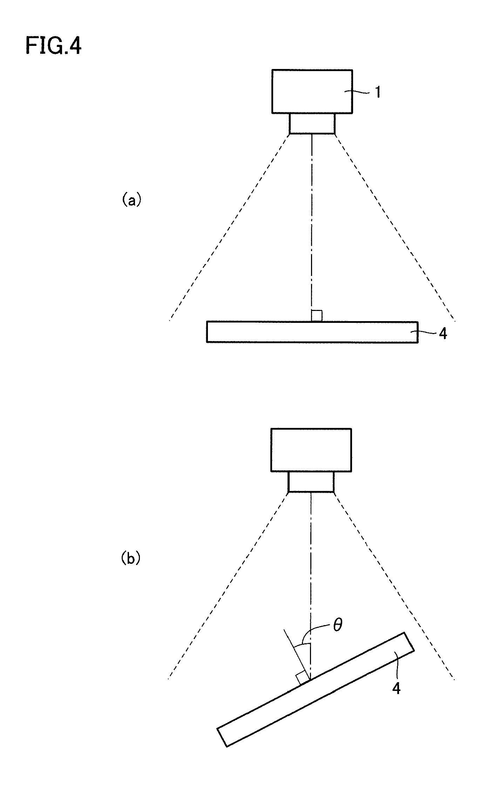

Fig. 4 is a schematic diagram showing the arrangement state of a measurement object to be detected by arrangement detection unit 30 in image processing apparatus 100 according to the embodiment of the present invention. Fig. 4(a) shows an example in which camera 1 faces a measurement object straight. In this example, the tilt angle of the measurement object (work 4) relative to camera 1 can be defined as 0°. Fig. 4(b) shows an example of deviation from the state in which camera 1 faces the measurement object straight. In this example, the angle between the distance direction axis of camera 1 and the orientation (normal direction) of the plane of the measurement object can be defined as a tilt angle θ. The tilt angle may be defined using the angle between the distance direction axis of camera 1 and the plane direction (tangent direction) of the measurement object.

Arrangement detection unit 30 outputs the distance between camera 1 and work 4 as information of arrangement state 12. Arrangement detection unit 30 includes a distance measurement unit that measures the distances to a plurality of points on the surface of work 4 and determines the tilt angle of work 4 relative to camera 1 by estimating the measured surface of work 4 based on the distance measurement results for a plurality of points on the surface of work 4. In the present embodiment, arrangement detection unit 30 includes, for example, a stereo camera or an optical distance measurement device (a laser distance measurement device or a millimeter wave radar distance measurement device) as the distance measurement unit (or part of it).

When a plurality of points on the surface of work 4 are measured using the distance measurement unit, plural pieces of data are obtained as positional information corresponding to the surface of work 4. The surface of work 4 can be estimated properly by extracting necessary data from among the plural pieces of obtained data through the processing as described later. Such arrangement detection unit 30 can be used to estimate the surface of work 4 and grasp the posture and distance of work 4 relative to camera 1. The cases where a stereo camera and a distance measurement device are employed as arrangement detection unit 30 will be described below.

### <<d1: Stereo Camera>>

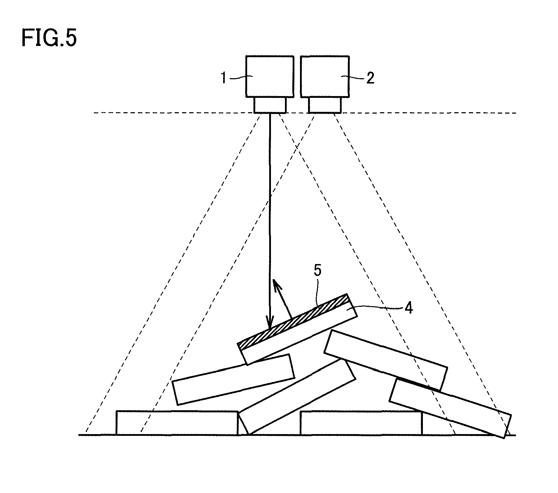

Fig. 5 is a schematic diagram showing an example of the case where a stereo camera is used as arrangement detection unit 30. Arrangement detection unit 30 obtains three-dimensional points representing a subject in a distance measurement range, through three-dimensional measurement using a stereo camera including camera 1 and camera 2. Arrangement detection unit 30 then extracts data corresponding to the measurement object from the obtained three-dimensional points within the measurement range.

If the surface of the measurement object is a plane, arrangement detection unit 30 performs plane approximation for the extracted data and obtains the orientation (normal vector) of the plane of the measurement object and the distance between camera 1 and the plane (the distance from the camera corresponding to one or more points in captured image 10), from the plane equation calculated by plane approximation.

If the surface of the measurement object is not a plane, for example, if the measurement object has a semicylindrical shape, like a barrel vault, arrangement detection unit 30 performs cylinder approximation for the extracted data and calculates the orientation of the cylinder surface (the angle of the approximated cylinder axis to the horizontal plane) and the distance between the camera and the cylinder surface (the distance from the camera that corresponds to one or more points on the cylinder surface in captured image 10).

The processing as described below can be used as a method of extracting data corresponding to a measurement object.

### (1) First Data Extraction Method

For example, as shown in Fig. 5, suppose that measurement objects are stacked at random. Arrangement detection unit 30 calculates a normal vector for each of the three-dimensional points representing the subject measured with the stereo camera, based on the positional relation with neighboring three-dimensional points. That is, the normal vector for each of the three-dimensional points is calculated. Arrangement detection unit 30 searches the three-dimensional points for a three-dimensional point closest to the camera and extracts its neighboring three-dimensional points to calculate the angle between the normal vector and the distance direction axis vector of the stereo camera for each of the three-dimensional point closest to the camera and the neighboring three-dimensional points. Arrangement detection unit 30 then counts the number of three-dimensional points that can be assumed to have the same angle. That is, for each group having the same angle between the normal vector and the distance direction axis vector, the number of three-dimensional points included in the group is counted.

Arrangement detection unit 30 then extracts three-dimensional points belonging to the group of angle having the maximum count from the group of three-dimensional points and provisionally performs plane approximation based on the extracted three-dimensional points. Arrangement detection unit 30 then calculates the distance of each three-dimensional point to the calculated provisional approximated plane and extracts three-dimensional points within a predetermined distance from the approximated plane, as three-dimensional points that constitute the measurement object surface.

In the final step, arrangement detection unit 30 performs plane approximation for the three-dimensional points extracted as the three-dimensional points that constitute the measurement object surface to determine the approximated plane of the measurement object surface, and then calculates the skew (tilt angle) of the measurement object surface relative to the camera from the normal vector of the approximated plane.

With such extraction processing, as shown in Fig. 5, three-dimensional points present on a plane most proximate to the camera and having the largest area are extracted, and the measurement object surface 5 of work 4 is approximated.

### (2) Second Data Extraction Method

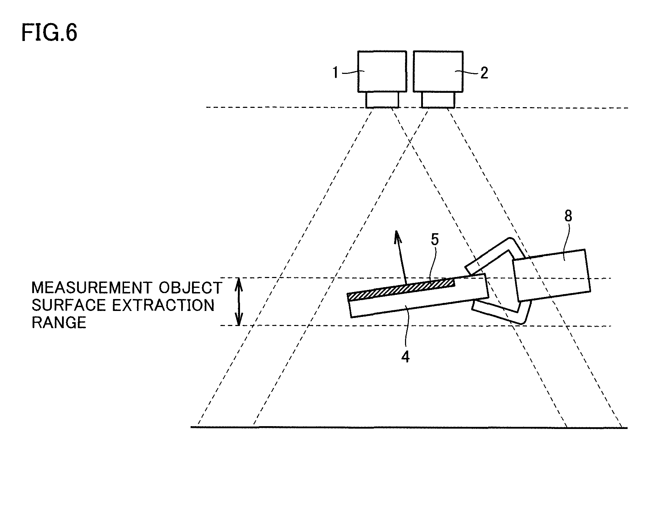

Fig. 6 is a schematic diagram showing another example of the arrangement state of a measurement object. For example, as shown in Fig. 6, suppose that a measurement object (work 4) is gripped with a robot arm 8. In this case, since the measurement object surface is present at a position (distance) fixed relative to the camera to some extent, three-dimensional points present within a predetermined distance (the measurement object surface extraction range in Fig. 6) to the camera can be extracted as three-dimensional points corresponding to the measurement object surface, from the three-dimensional points measured by the stereo camera. That is, data that represents points in the image present within a predetermined distance from camera 1 is extracted. Arrangement detection unit 30 performs plane approximation for the extracted three-dimensional points to determine the approximated plane of the measurement object surface, and then calculates the skew (tilt angle) of the measurement object surface relative to the camera from the normal vector of this approximated plane.

With such extraction processing, as shown in Fig. 6, three-dimensional points within a predetermined distance from the camera are extracted, and the plane of measurement object surface 5 of work 4 is approximated.

### (3) Third Data Extraction Method

For example, suppose that the relative position between the measurement object and the camera is roughly determined. In this case, a region where a subject corresponding to a template image is assumed to be visualized in captured image 10 is set in advance. Arrangement detection unit 30 extracts three-dimensional points corresponding to the set region from among three-dimensional points measured by the stereo camera, performs approximation plane for the extracted three-dimensional points to determine the approximated plane of the measurement object surface, and then calculates the skew (tilt angle) of the measurement object surface relative to the camera from the normal vector of the approximated plane. That is, three-dimensional points within a predetermined range in captured image 10 are extracted, and the plane of measurement object surface 5 of work 4 is approximated.

### (4) Fourth Data Extraction Method

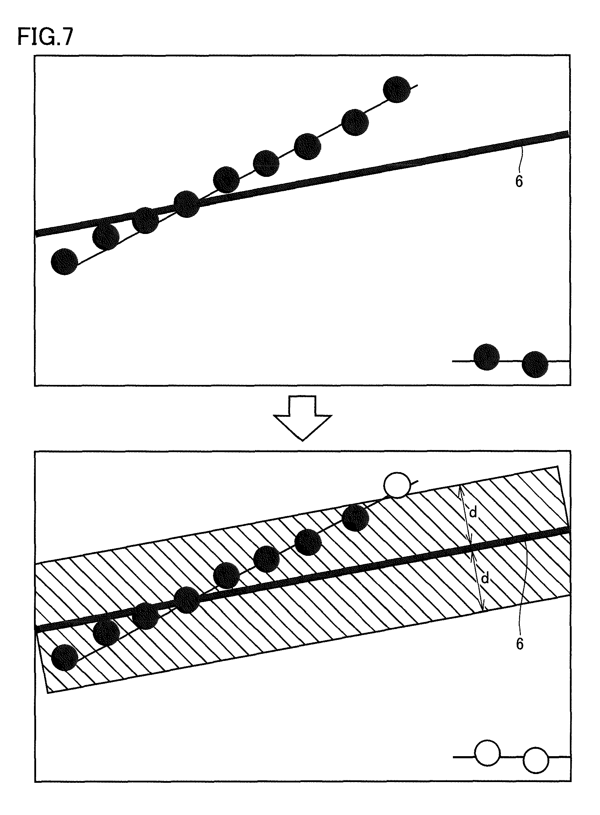

For example, suppose that a measurement object is arranged to the limit of the angle of view of captured image 10. Fig. 7 is a schematic diagram showing an example of the data extraction processing by arrangement detection unit 30 according to the embodiment of the present invention.

As shown in Fig. 7(a), arrangement detection unit 30 performs plane approximation using all of the three-dimensional points measured by the stereo camera and calculates the distance of each of the three-dimensional points relative to the approximated plane 6. Although most of the measured three-dimensional points are thought to be points on the measurement object surface, points on a surface that is not the measurement object, for example, such as the floor surface, may be possibly measured as three-dimensional points. This may result in that the calculated approximated plane 6 deviates from the actual measurement object surface.

As shown in Fig. 7(b), arrangement detection unit 30 then extracts only the three-dimensional points included in a predetermined distance (in the figure, d) from the approximated plane 6 as three-dimensional points that constitute the measurement object surface. Approximation plane is performed for the extracted three-dimensional points to determine the approximated plane of the measurement object surface, and the skew (tilt angle) of the measurement object surface relative to the camera is then calculated from the normal vector of this approximated plane.

That is, for the position corresponding to work 4, arrangement detection unit 30 extracts three-dimensional points within a predetermined distance from the approximated plane after assuming approximated plane 6 with the three-dimensional points as a whole. When work 4 is visualized in the entire image, such extraction processing is performed without limiting a range, so that a section corresponding to the measurement object surface can be specified. With such data extraction processing, three-dimensional points outside the measurement object surface can be eliminated, and more precise estimation of the approximated plane can be achieved.

### «d2: Laser Distance Measurement Device»

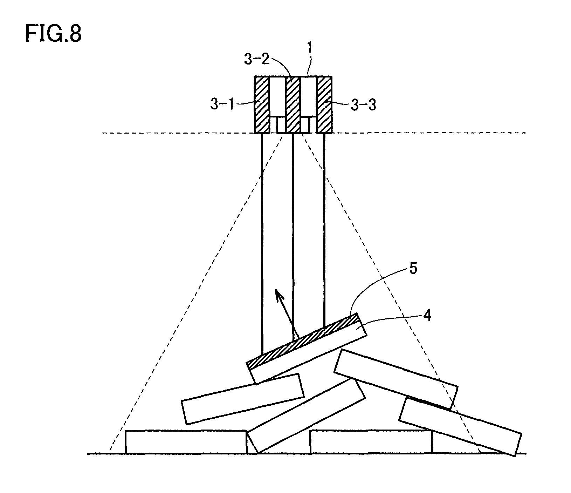

Fig. 8 is a schematic diagram showing a configuration example including a laser distance measurement device used as the arrangement detection unit. Laser distance measurement devices 3-1, 3-2, 3-3 as shown in Fig. 8 may be used in place of the stereo camera. Specifically, a plurality of (preferably, three or more) laser distance measurement devices 3-1, 3-2, 3-3 are arranged in the vicinity of camera 1 serving as an imaging unit. The relative positions of laser distance measurement devices 3-1, 3-2, 3-3 to camera 1 are known, and the distance measurement direction of laser distance measurement devices 3-1, 3-2, 3-3 is arranged parallel to the optical axis direction of camera 1. Arrangement detection unit 30 determines the approximated plane of the measurement object surface using the distance measurement results of laser distance measurement devices 3-1, 3-2, 3-3 and information of the relative position between the laser distance measurement devices and then calculates the skew (tilt angle) of the measurement object surface relative to the camera from the normal vector of the approximated plane. In the configuration shown in Fig. 8, for example, measurement object surface 5 of work 4 is measured.

The arrangement detection unit (laser distance measurement devices 3-1, 3-2, 3-3) may additionally output the distance from camera 1 to work 4. The distance between camera 1 and work 4 can be obtained using such information, and scale deviation resulting from deviation in distance can be calculated.

### «d3. Millimeter Wave Radar Distance Measurement Device»

A millimeter wave radar distance measurement device may be used in place of the laser distance measurement device shown in Fig. 8. Also in this case, the millimeter wave radar distance measurement device is arranged at a known relative position to camera 1 serving as an imaging unit. Arrangement detection unit 30 converts the distance measurement result by the millimeter wave radar distance measurement device using the information of the known relative position to associate the converted distance measurement result with each pixel position of captured image 10 captured by the camera and determines the approximated plane of the measurement object surface based on the associated information, and then calculates the skew (tilt angle) of the measurement object surface relative to the camera from the normal vector of the approximated plane.

### [E. Skew Correction Unit]

Skew correction unit 150 corrects captured image 10 based on the skew (tilt angle) of the measurement object surface relative to the camera that is obtained by arrangement detection unit 30 and generates a corrected image corresponding to a state in which the measurement object faces the camera straight.

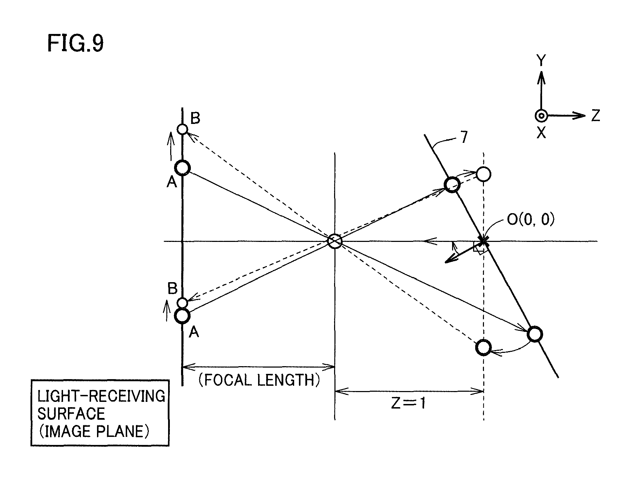

Fig. 9 is a diagram illustrating the processing in skew correction unit 150 in image processing apparatus 100 according to the embodiment of the present invention. Referring to Fig. 9, a virtual plane 7 is set, which passes through a point (the center of rotation O) within a predetermined distance from the camera and has a skew detected by arrangement detection unit 30. Let the position of the center of rotation O in the image plane be (X,Y) = (0,0) that is the position corresponding to the center of the image, and the distance in the Z direction be Z = 1 (predetermined distance). Skew correction unit 150 calculates the three-dimensional points on virtual plane 7 corresponding to predetermined points (for example, four corners of the image, points A in Fig. 9) in captured image 10.

Skew correction unit 150 then calculates a rotation matrix for matching the normal vector direction of virtual plane 7 with the optical axis direction (Z direction) of camera 1 and applies the calculated rotation matrix around the center of rotation O to the previously calculated points on virtual plane 7. Skew correction unit 150 calculates the positions (points B in Fig. 9) in the image after skew correction by projecting the points on virtual plane 7 rotated by applying the rotation matrix onto the image and determines a homography (transform matrix) for converting points A to points B.

Skew correction unit 150 applies the thus determined homography to captured image 10 to generate skew-corrected image 14.

It is noted that the center of rotation O is not limited to the position corresponding to the center of the image and may be set at any point (XY position) in the image, because re-correction is possible by feeding back the result of the template matching as described later. The distance to the reference point (the point corresponding to the focal length from the light-receiving surface) is preferably fixed at a predetermined value (for example, Z = 1).

### [F. Scale Deviation Amount Calculation Unit (Scale Correction Unit)]

### <<f1: Scale Deviation>>

In the skew correction described above, if the center of rotation does not agree with the position intended to be detected as the position corresponding to template image 18, the region corresponding to template image 18 is enlarged or reduced in skew-corrected image 14. That is, scale deviation occurs between template image 18 and skew-corrected image 14. In order to correct this, scale deviation amount calculation unit 154 calculates the amount of scale deviation.

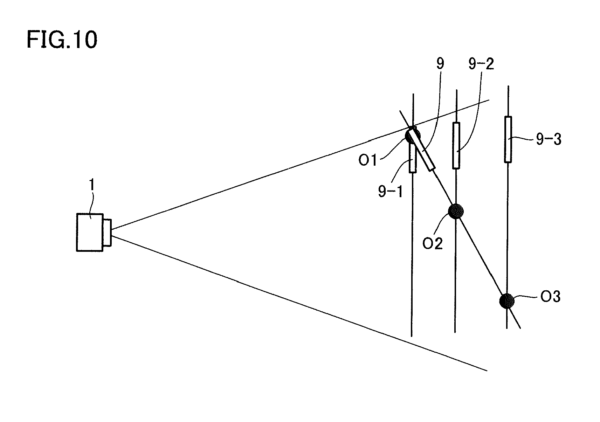

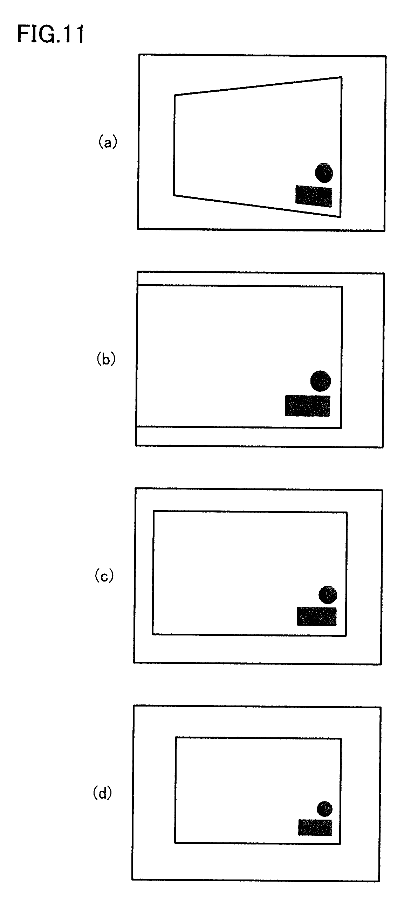

Fig. 10 is a schematic diagram illustrating the skew correction processing in image processing apparatus 100 according to the embodiment of the present invention. Fig. 11 is a diagram showing examples of the processing result corresponding to the processing in Fig. 10.

Fig. 10 shows the virtual plane positions after skew correction according to differences in the center of rotation (shown by black circles in the figure) during skew correction. Specifically, Fig. 10 shows the results of skew correction performed on captured image 10 with three centers of rotation O1, O2, O3. A template-corresponding region 9 corresponding to template image 18 in captured image 10 is shifted to virtual positions 9-1, 9-2, 9-3 in the virtual space through skew correction for the centers of rotation O1, 02, 03, respectively.

Such a difference in center of rotation during skew correction produces different skew-corrected images as shown in Fig. 11. That is, the virtual distance from camera 1 varies with shifts to virtual positions 9-1, 9-2, 9-3, so that the region intended to be detected as the template position is enlarged or reduced. Specifically, Fig. 11(a) shows an example of captured image 10, and Figs. 11(b) to (d) show examples of skew-corrected image 14 corresponding to virtual positions 9-1, 9-2, 9-3, respectively. As shown in Fig. 10 and Fig. 11, the deviation in position of the virtual plane subjected to skew correction causes a difference in scale in skew-corrected image 14.

### <<f2: Scale Deviation Amount Calculation>>

Scale deviation amount calculation unit 154 calculates the three-dimensional position of a region corresponding to template image 18 on the measurement object surface, from the output result from arrangement detection unit 30 at the time of capturing template image 18 (the plane position and orientation of the measurement object for generating template image 18: information of arrangement state 12 in Fig. 2) and the position of the region set as template image 18 in captured image 10. Scale deviation amount calculation unit 154 then calculates the amount of scale deviation from the distance (Dt) between camera 1 and the measurement object (work 4) that is calculated from the three-dimensional position, the output result from arrangement detection unit 30 that is obtained at the time of capturing work 4, and the position of the center of rotation at the time of skew correction (for example, the position corresponding to the center of the image).

Scale deviation amount calculation unit 154 calculates the ratio (Dt/Di) of distance Dt with respect to the distance (Di) between camera 1 and the position of the center of rotation at the time of skew correction that is calculated from the three-dimensional position of the center of rotation, and determines the calculated ratio as the amount of scale deviation. That is, scale deviation amount calculation unit 154 calculates the amount of scale deviation, based on the distance to the position corresponding to template image 18 of work 4 (the distance from camera 1 to work 4 at the template position of work 4 that is obtained by arrangement detection unit 30 at the time of capturing template image 18) and the distance to the position corresponding to the center of rotation used when skew correction unit 150 generates skew-corrected image 14 (the distance from camera 1 to work 4 at the position of the center of rotation in the skew correction processing that is obtained by arrangement detection unit 30 at the time of capturing an image of work 4). Such processing can be employed to correct a scale deviation produced by the distance deviation between camera 1 and work 4 and thereby stabilize template matching.

### <<f3: First Modification of Scale Deviation Amount Calculation>>

As a modification, the Fourier-Mellin Invariant method may be applied to skew-corrected image 14 and template image 18 to calculate a scale deviation (for more details, see Q.Chen et al. "Symmetric Phase-Only Matched Filtering of Fourier-Mellin Transforms for Image Registration and Recognition" (NPD 1)).

Scale deviation amount calculation unit 154 calculates the amount of scale deviation using the Fourier-Mellin invariant as described above. When the method of using frequency space information, such as POC (Phase Only Correlation), is employed as a template matching technique, the compatibility with the Fourier-Mellin invariant method, which uses frequency space information as well, is good. The template matching thus can be stabilized more.

### <<f4: Second Modification of Scale Deviation Amount Calculation>>

As another modification, the amount of scale deviation may be calculated by performing mapping of feature points between skew-corrected image 14 and template image 18.

Specifically, scale deviation amount calculation unit 154 applies, for example, a Sobel filter to each of skew-corrected image 14 and template image 18 to extract edge points and extract feature points such as corners. Feature points extracted from skew-corrected image 14 are written as Pa, and feature points extracted from template image 18 are written as Pt. Scale deviation amount calculation unit 154 then performs mapping between the feature points extracted from skew-corrected image 14 and from template image 18, for example, based on the SIFT (Scale-Invariant Feature Transform) feature amount. For example, scale deviation amount calculation unit 154 maps a feature point Ptⁱ and a feature point Paⁱ representing similar features amounts similar to each other. Scale deviation amount calculation unit 154 thereafter calculates the distance between feature points in each image (for example, //Ptⁱ - Pt^{j}// for skew-corrected image 14 and //Paⁱ - Pa^{j}// for template image 18) and extracts a combination of the distances between feature points equal to or greater than a predetermined value. In the final step, scale deviation amount calculation unit 154 determines, as a scale deviation amount, the mean value of ratios between the distance between feature points in template image 18 and the distance between feature points in skew-corrected image 14 (//Ptⁱ - Pt^{j}// / //Paⁱ - Pa^{j}//).

Scale correction unit 152 thus performs feature point extraction processing on both of skew-corrected image 14 and template image 18 to extract feature points from each of skew-corrected image 14 and template image 18 and calculates the amount of scale deviation based on the ratio between the distances between the extracted feature points. According to the present modification, a scale deviation can be calculated from inter-image information.

### <<f5: Third Modification of Scale Deviation Amount Calculation>>

As yet another modification, different magnification variations are applied to a reference template image 18 to generate a plurality of template images, and scale deviation amount calculation unit 154 performs template matching between these template images and skew-corrected image 14. For example, the SAD (Sum of Absolute Differences) method can be used for this template matching. Scale deviation amount calculation unit 154 then determines, as the amount of scale deviation, the magnification corresponding to the template image with the smallest SAD value among the plurality of template images, as the result of template matching.

### [G. Scale-Corrected Image Generation Unit (Scale Correction Unit)]

Scale-corrected image generation unit 156 generates scale-corrected image 16 from skew-corrected image 14 so as to have a scale equal to the scale of template image 18, based on the amount of scale deviation calculated by scale deviation amount calculation unit 154.

### [H. Template Matching Unit]

Template matching unit 158 performs template matching on scale-corrected image 16 generated by scale-corrected image generation unit 156 (scale correction unit 152), using template image 18, to detect the position corresponding to template image 18 in scale-corrected image 16.

Basically, any template matching method can be applied, because scale-corrected image 16 has been corrected in terms of both the skew (tilt angle) of the measurement object surface and the scale as described above.

For example, template matching unit 158 executes pattern matching by the RIPOC (Rotation Invariant Phase Only Correlation) method. The RIPOC method can be employed to perform matching processing with high precision even when deviation in the rotation direction occurs between scale-corrected image 16 and template image 18. The method of pattern matching using the frequency components of images, such as RIPOC, is preferable in terms of matching precision and robustness. When the frequency components of images are used in template matching, it is preferable to use a rectangular template.

When scale deviation amount calculation unit 154 applies the Fourier-Mellin Invariant method to calculate the amount of scale deviation, information about deviation in the rotation direction can also be obtained. In such a case, for example, template matching by the POC (Phase Only Correlation) method or the SAD (Sum of Absolute Difference) method may be executed after the amount of deviation in the rotation direction between template image 18 and scale-corrected image 16 is corrected. In particular, the POC method, which uses the frequency components of images, is preferable.

### [I. Result Output Unit]

The position detected by template matching unit 158 is the position corresponding to template image 18 in scale-corrected image 16. Result output unit 160 then calculates and outputs the position in captured image 10 from the detected position. Result output unit 160 calculates the position in the image before correction (captured image 10) that corresponds to the position in scale-corrected image 16. In the present embodiment, since template matching is performed after captured image 10 is corrected, the template-corresponding position in captured image 10 cannot be specified without conversion into the position in the image before correction.

### <<i1: Position-Before-Correction Calculation Unit>>

Position-before-correction calculation unit 162 converts the position detection result in scale-corrected image 16 that is obtained by template matching unit 158, into the position in the image before correction. More specifically, position-before-correction calculation unit 162 reversely converts each of the scale correction applied in scale-corrected image generation unit 156 and the homography applied in skew correction unit 150 for conversion into the position in captured image 10 that is input to skew correction unit 150.

### «i2: Three-Dimensional Position Calculation Unit»

Three-dimensional position calculation unit 164 calculates the position in a three-dimensional space that corresponds to the position in captured image 10 (the position in the image before correction), based on the position in captured image 10 that is obtained by position-before-correction calculation unit 162 (the position in the image before correction) and the distance measurement result obtained by arrangement detection unit 30. For example, three-dimensional position calculation unit 164 applies the result of measurement by the stereo camera that corresponds to the position in captured image 10 to determine the position in a three-dimensional space.

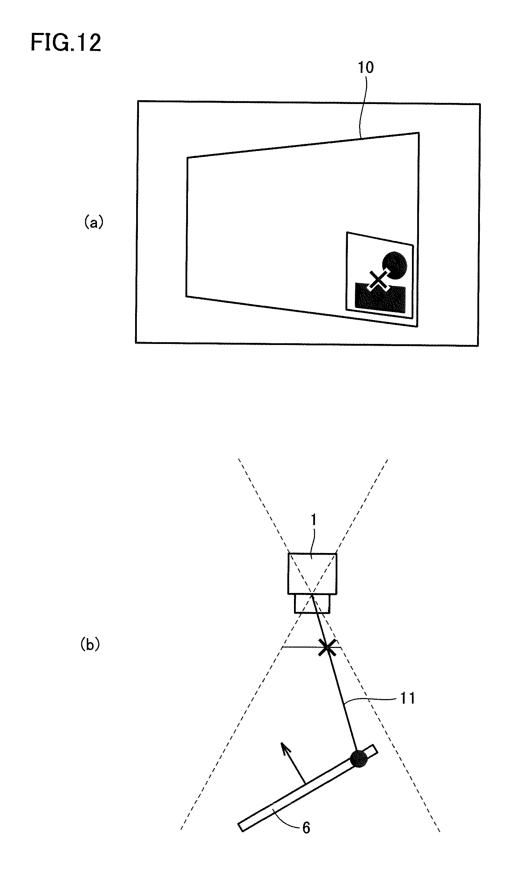

Fig. 12 is a schematic diagram illustrating the three-dimensional position calculation processing in image processing apparatus 100 according to the embodiment of the present invention. In Fig. 12(a) and Fig. 12(b), the cross symbol represents a template position in captured image 10, and the black circle symbol represents the calculation result of the three-dimensional position in the approximated plane 6 determined by arrangement detection unit 30.

In the example shown in Fig. 12, three-dimensional position calculation unit 164 calculates the position in a three-dimensional space (the position indicated by the black circle symbol in Fig. 12(b)) as the point of intersection between a line-of-sight vector 11 (see Fig. 12(b)) calculated from the position in captured image 10 (the position indicated by the cross symbol in Fig. 12(a)) and the approximated plane 6 estimated by arrangement detection unit 30.

Result output unit 160 thus calculates the three-dimensional position of the measurement object from the position calculation result in the image before correction (captured image 10) and the information output by arrangement detection unit 30. As described above, with the measurement object surface and the position in the image before correction, the three-dimensional position corresponding to the template position can be calculated as the point of intersection between the line of sight and the plane. When a stereo camera is employed as arrangement detection unit 30, the three-dimensional position corresponding to the template position can be determined by obtaining the three-dimensional measurement result corresponding to the position in the image before correction.

### [J. Other Functional Configurations]

### «j 1: First Modification»

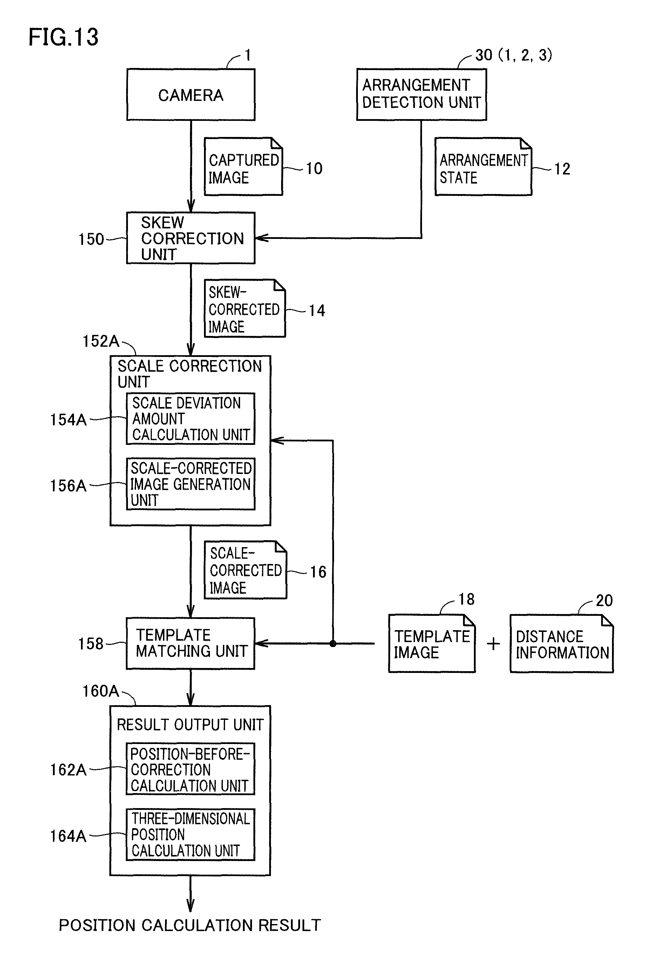

Fig. 13 is a schematic diagram showing a first modification of the functional configuration of image processing apparatus 100 according to the embodiment of the present invention. Referring to Fig. 13, image processing apparatus 100 according to the present modification includes, as its functional configuration, arrangement detection unit 30, skew correction unit 150, a scale correction unit 152A, template matching unit 158, and a result output unit 160A. This functional configuration is typically implemented in image processing apparatus 100 shown in Fig. 2 by CPU 102 executing template matching processing program 112.

The functional configuration shown in Fig. 13 differs from the functional configuration shown in Fig. 3 in that information of arrangement state 12 detected by arrangement detection unit 30 is not used in scale correction unit 152A (a scale deviation amount calculation unit 154A and a scale-corrected image generation unit 156A) and result output unit 160A (a position-before-correction calculation unit 162A and a three-dimensional position calculation unit 164A). That is, scale correction unit 152A calculates the amount of scale deviation, based on skew-corrected image 14 as well as template image 18 and distance information 20. Result output unit 160A outputs the position calculation result based on the position detection result by template matching unit 158. Here, scale correction unit 152A and result output unit 160A use the Fourier-Mellin Invariant method.

### <<j2: Second Modification>>

The configuration described below may be employed when captured image 10 and template image 18 are both captured in a state of facing camera 1 not straight. That is, template matching is performed after skew correction and scale deviation correction are performed for both captured image 10 and template image 18, thereby increasing the matching precision.

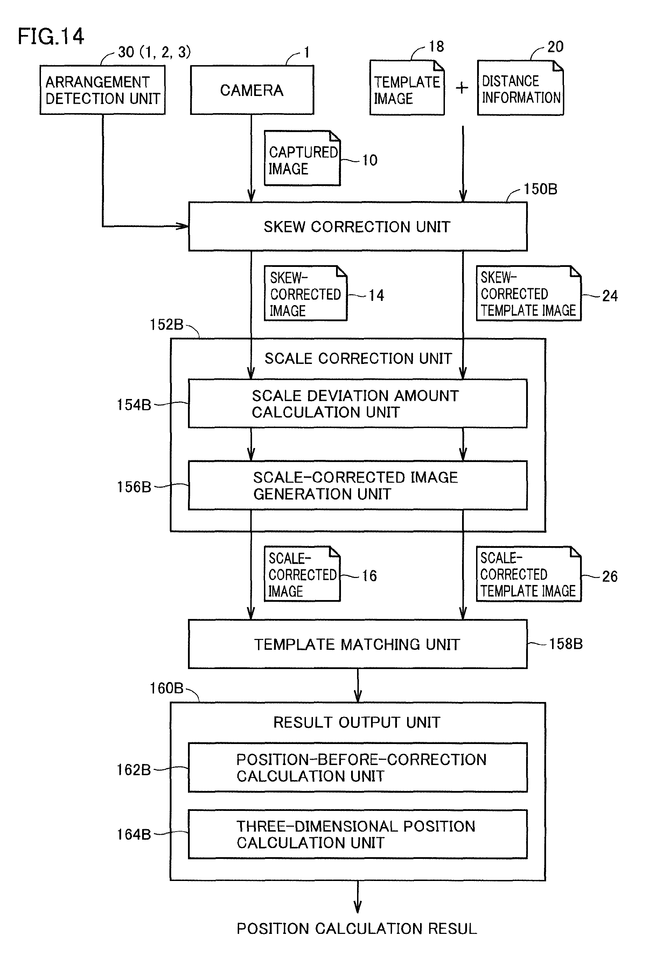

Fig. 14 is a schematic diagram showing a second modification of the functional configuration of image processing apparatus 100 according to the embodiment of the present invention. Referring to Fig. 14, image processing apparatus 100 according to the present modification includes, as its functional configuration, arrangement detection unit 30, a skew correction unit 150B, a scale correction unit 152B (a scale deviation amount calculation unit 154B and a scale-corrected image generation unit 156B), a template matching unit 158B, and a result output unit 160B (a position-before-correction calculation unit 162B and a three-dimensional position calculation unit 164B). This functional configuration is typically implemented in image processing apparatus 100 shown in Fig. 2 by CPU 102 executing template matching processing program 112.

Specifically, skew correction unit 150B corrects captured image 10 based on the information of arrangement state 12 detected by arrangement detection unit 30 to generate a skew-corrected image 14 and corrects template image 18 based on distance information 20 to generate a skew-corrected template image 24. Scale correction unit 152B performs scale correction on skew-corrected image 14 and skew-corrected template image 24, based on the calculated amount of scale deviation, to generate a scale-corrected image 16 and a scale-corrected template image 26. Template matching unit 158B executes template matching using scale-corrected image 16 and scale-corrected template image 26. Result output unit 160B outputs the position calculation result from the position detection result by template matching unit 158B.

As described above, image processing apparatus 100 according to the present modification has a template correction unit (scale correction unit 152B) that corrects template image 18 in parallel with generation of scale-corrected image 16. In the present modification, template image 18 is also corrected during generation of scale-corrected image 16 as described above. Hence, even when the registered template image 18 is skewed relative to camera 1, template image 18 is corrected to ensure more stable template matching.

### <<j3: Third Modification>>

As described with reference to Fig. 10, in the skew correction processing, it is preferable that the position of the center of rotation be matched with the template position. This is because if the position of the center of rotation in the skew correction processing deviates from the template position, enlargement or reduction occurs at the template position in the generated skew-corrected image 14, thereby possibly resulting in reduction in information volume. The skew correction processing and template matching may be executed again after template matching, using the template position obtained through the template matching as the position of the center of rotation for the skew correction processing, and the position calculation result may be output based on the result. Such a configuration can be employed to execute skew correction using the template position as the position of the center of rotation. Reduction in information volume due to skew correction thus can be avoided, and the more precise template matching result can be obtained.

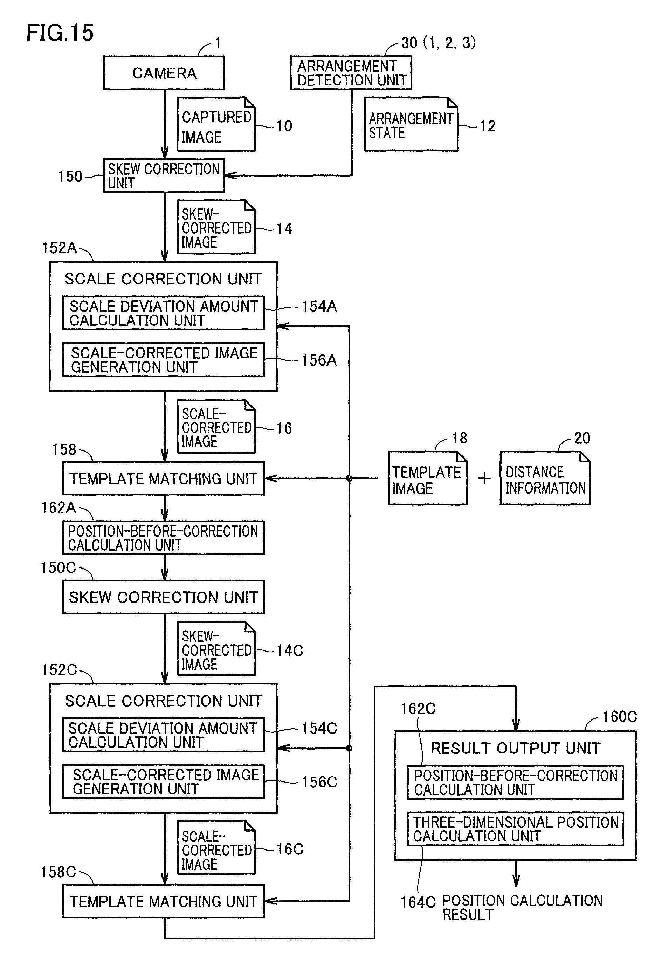

Fig. 15 a schematic diagram showing a third modification of the functional configuration of image processing apparatus 100 according to the embodiment of the present invention. Referring to Fig. 15, information processing apparatus 100 according to the present modification includes arrangement detection unit 30, skew correction unit 150, scale correction unit 152A (scale deviation amount calculation unit 154A and scale-corrected image generation unit 156A), template matching unit 158, position-before-correction calculation unit 162, a skew correction unit 150C, a scale correction unit 152C (a scale deviation amount calculation unit 154C and a scale-corrected image generation unit 156C), a template matching unit 158C, and a result output unit 160C (a position-before-correction calculation unit 162C and a three-dimensional position calculation unit 164C). This functional configuration is typically implemented in image processing apparatus 100 shown in Fig. 2 by CPU 102 executing template matching processing program 112.

In Fig. 15, arrangement detection unit 30, skew correction unit 150, scale correction unit 152A, template matching unit 158, and position-before-correction calculation unit 162 are units corresponding to pre-processing for provisionally calculating the position (template position) corresponding to template image 18 in captured image 10. Here, scale correction unit 152A and position-before-correction calculation unit 162A use the Fourier-Mellin Invariant method.

Skew correction unit 150C then performs skew correction using the calculated template position as the center of rotation to generate a skew-corrected image 14C. Scale correction unit 152C performs scale correction on skew-corrected image 14C to generate a scale-corrected image. Template matching unit 158C executes template matching on the scale-corrected image. Result output unit 160C outputs the position calculation result from the position detection result by template matching unit 158C.

As described above, image processing apparatus 100 according to the present modification performs correction on captured image 10 obtained by capturing an image of work 4 and sets the position of the center of rotation in new skew correction to the position obtained by converting the position as a template matching result into the position in captured image 10, performs skew correction again on captured image 10 based on the set center of rotation to generate skew-corrected image 14C, and outputs the result of the template matching performed again as the final template matching result.

That is, position-before-correction calculation unit 162A performs, as pre-processing, template matching using template image 18 on scale-corrected image 16 generated by skew correction unit 150 and scale correction unit 152A, to determine the position corresponding to template image 18 in captured image 10. Skew correction unit 150C then corrects captured image 10 around the position corresponding to template image 18 in captured image 10 that is determined in the pre-processing to generate skew-corrected image 14C. Scale correction unit 152C performs scale correction on skew-corrected image 14C generated by skew correction unit 150C to generate scale-corrected image 16C. Template matching unit 158C performs, as main processing, template matching using template image 18 on scale-corrected image 16C to determine the position corresponding to template image 18 in captured image 10.

During skew correction, if the position corresponding to template image 18 is distant from the position of the center of rotation at the time of skew correction, skew-corrected image 14 corresponding to template image 18 is enlarged or reduced, possibly leading to loss of information. Loss of information can be avoided by performing skew correction around the vicinity of the template position. The more precise template position detection result can be obtained.

The embodiment disclosed here should be understood as being illustrative rather than being limitative in all respects. The scope of the present invention is shown not in the foregoing description but in the claims, and it is intended that all modifications that come within the meaning and range of equivalence to the claims are embraced here.

### REFERENCE SIGNS LIST

1, 2 camera, 1A, 1B image processing system, 3 distance measurement device, 4 work, 5 measurement object surface, 6 approximated plane, 7 virtual plane, 8 robot arm, 10 captured image, 12 arrangement state, 14 skew-corrected image, 16, 16C scale-corrected image, 18 template image, 20 distance information, 24 skew-corrected template image, 26 scale-corrected template image, 30 arrangement detection unit, 100 image processing apparatus, 102 CPU, 104 RAM, 106 ROM, 108 network interface, 110 auxiliary storage device, 112 template matching processing program, 120 display unit, 122 input unit, 124 memory card interface, 126 memory card, 128 camera interface, 130 bus, 132 sensor interface, 150, 150B, 150C skew correction unit, 152, 152A, 152B, 152C scale correction unit, 154, 154A, 154B, 154C scale deviation amount calculation unit, 156, 156A, 156B, 156C scale-corrected image generation unit, 158, 158B, 158C template matching unit, 160, 160A, 160B, 160C result output unit, 162, 162A, 162B, 162C position-before calculation unit, 164, 164A, 164B, 164C three-dimensional position calculation unit.

## Claims

1. An image processing system comprising:
an imaging device configured to capture an image of a measurement object to obtain a captured image;
an arrangement detection unit configured to detect an arrangement state of the measurement object and determine a tilt angle of the measurement object relative to the imaging device;
a storage unit configured to store a template image;
a skew correction unit configured to correct the captured image based on the tilt angle determined by the arrangement detection unit to generate a skew-corrected image;
a scale correction unit configured to calculate an amount of scale deviation between the skew-corrected image and the template image and correct the skew-corrected image based on the calculated amount of scale deviation to generate a scale-corrected image; and
a position search unit configured to perform template matching using the template image on the scale-corrected image to determine a position corresponding to the template image in the captured image.

2. The image processing system according to claim 1, wherein
the arrangement detection unit includes a distance measurement unit configured to measure distances to a plurality of points on a surface of the measurement object, and
the arrangement detection unit estimates a measurement surface of the measurement object, based on distance measurement results for the plurality of points on the surface of the measurement object.

3. The image processing system according to claim 1, wherein the arrangement detection unit outputs a distance between the imaging device and the measurement object.

4. The image processing system according to any one of claims 1 to 3, wherein the scale correction unit calculates the amount of scale deviation, based on information of a position corresponding to a center of rotation used when the skew correction unit generates the skew-corrected image.

5. The image processing system according to any one of claims 1 to 3, wherein the scale correction unit calculates the amount of scale deviation using Fourier-Mellin invariant.

6. The image processing system according to any one of claims 1 to 3, wherein the scale correction unit extracts feature points from each of the skew-corrected image and the template image and calculates the amount of scale deviation based on a ratio between distances between the extracted feature points.

7. The image processing system according to any one of claims 1 to 6, further comprising a template generation unit configured to generate the template image from the captured image, wherein the template generation unit stores an arrangement state of a measurement object when a captured image corresponding to the generated template image is captured, into the storage unit in relation with the generated template image.

8. The image processing system according to any one of claims 1 to 7, further comprising a template correction unit configured to correct the template image.

9. The image processing system according to any one of claims 1 to 8, wherein the arrangement detection unit includes a stereo camera.

10. The image processing system according to claim 9, wherein one of cameras of the stereo camera is composed of the imaging device.

11. The image processing system according to any one of claims 1 to 8, wherein the arrangement detection unit includes an optical distance measurement device with a fixed relative position to the imaging device.

12. The image processing system according to any one of claims 1 to 11, wherein the arrangement detection unit extracts, as positional information corresponding to the surface of the measurement object, data that represents any one of:
a point closest to the imaging device; a point present within a predetermined distance from the imaging device; and a point present within a predetermined range in a measured region.

13. The image processing system according to any one of claims 1 to 11, wherein the arrangement detection unit estimates, as positional information corresponding to the surface of the measurement object, a surface shape of the measurement object using entire three-dimensional data in a measured region, and extracts three-dimensional data present within a predetermined distance to the estimated surface shape.

14. The image processing system according to any one of claims 1 to 13, wherein the position search unit includes a result output unit configured to calculate a position in the captured image that corresponds to a position in the scale-corrected image specified by template matching using the template image.

15. The image processing system according to claim 14, wherein the result output unit calculates a three-dimensional position of the measurement object, based on a calculation result for the position in the captured image and the arrangement state detected by the arrangement detection unit.

16. The image processing system according to any one of claims 1 to 15, wherein
the position search unit performs, as pre-processing, template matching using the template image on a first scale-corrected image generated by the skew correction unit and the scale correction unit, to determine a position corresponding to the template image in the captured image,
the scale correction unit performs scale correction on a skew-corrected image generated by the skew correction unit correcting the captured image around the position corresponding to the template image in the captured image determined in the pre-processing, to generate a second scale-corrected image, and
the position search unit performs, as main processing, template matching using the template image on the second scale-corrected image to determine a position corresponding to the template image in the captured image.

17. An image processing apparatus for use in an image processing system including an imaging device configured to capture an image of a measurement object to obtain a captured image and an arrangement detection unit configured to detect an arrangement state of the measurement object and determine a tilt angle of the measurement object relative to the imaging device, the image processing apparatus comprising:
a storage unit configured to store a template image;
a skew correction unit configured to correct the captured image based on the tilt angle determined by the arrangement detection unit to generate a skew-corrected image;
a scale correction unit configured to calculate an amount of scale deviation between the skew-corrected image and the template image and correct the skew-corrected image based on the calculated amount of scale deviation to generate a scale-corrected image; and
a position search unit configured to perform template matching using the template image on the scale-corrected image to determine a position corresponding to the template image in the captured image.

18. An image processing method for performing template matching using a template image registered in advance, the image processing method comprising the steps of:
obtaining a captured image of a measurement object captured by an imaging device;
detecting an arrangement state of the measurement object and determining a tilt angle of the measurement object relative to the imaging device;
correcting the captured image based on the tilt angle to generate a skew-corrected image;
calculating an amount of scale deviation between the skew-corrected image and the template image and correcting the skew-corrected image based on the calculated amount of scale deviation to generate a scale-corrected image; and
performing template matching using the template image on the scale-corrected image to determine a position corresponding to the template image in the captured image.

19. An image processing program for performing template matching using a template image registered in advance, the image processing program causing a computer to execute the steps of:
obtaining a captured image of a measurement object captured by an imaging device;
obtaining a tilt angle of the measurement object relative to the imaging device that is determined by an arrangement detection unit;
correcting the captured image based on the tilt angle to generate a skew-corrected image;
calculating an amount of scale deviation between the skew-corrected image and the template image and correcting the skew-corrected image based on the calculated amount of scale deviation to generate a scale-corrected image; and
performing template matching using the template image on the scale-corrected image to determine a position corresponding to the template image in the captured image.
